# EUROPÄISCHE PATENTSCHRIFT

(11) **EP 1 147 866 B1**
(45) Veröffentlichungstag und Bekanntmachung des Hinweises auf die Patenterteilung: **20.10.2004**
(21) Anmeldenummer: 00128747.3
(22) Anmeldetag: 30.12.2000
(51) Int. Cl.: B26D 11/00, B26D 3/22, B26D 7/01, B26D 7/06

(54) **Vorrichtung und Schneideinrichtung zum Zerkleinern von Nahrungsmitteln**
Apparatus for cutting food
Dispositif pour la coupe d'aliments

(30) Priorität: 29.02.2000 DE 10009703
(43) Veröffentlichungstag der Anmeldung: 24.10.2001
(73) Patentinhaber: MAGURIT Gefrierschneider GmbH, 42897 Remscheid (DE)
(72) Erfinder: Vieth, Walter, 42929 Wermelskirchen (DE)
(74) Vertreter: Röhl, Wolf Horst, Dipl.-Phys., Dr.

(56) Entgegenhaltungen:
- EP-A- 0 931 630
- DE-A- 19 518 595
- US-A- 5 271 304
- US-A- 5 410 954

## Beschreibung

Die Erfindung betrifft eine Vorrichtung und eine Schneideinrichtung zum Zerkleinern von Nahrungsmitteln nach den Oberbegriffen der Ansprüch 1 bzw. 14.

Derartige Vorrichtungen zum Zerkleinern von Nahrungsmitteln wie zum Inscheibenschneiden oder Würfeln von Frischfleisch oder Fisch, wie sie beispielsweise aus EP 0 931 630 A1 bekannt sind, umfassen am Ende eines Förderers eine Schneidstation mit zwei Schneideinrichtungen, von denen eine erste wenigstens ein Messer umfaßt, das um eine Achse rotiert, die sich parallel zur Förderrichtung erstreckt, während eine zweite nachfolgende von einem Kreismessersatz gebildet wird, der um eine horizontale, senkrecht zur Förderrichtung verlaufende Achse mittels eines entsprechenden Antriebs drehbar ist. Der Kreismessersatz wird dabei von einem zum Säubern um eine vertikale Achse schwenkbaren Gehäuse zwischen Seitenwänden hiervon aufgenommen. Die Eintrittsöffnung des Gehäuses ist hierbei unterseitig durch eine kammartige Gegenleiste begrenzt, an der das Messer der ersten Schneideinrichtung vorbei läuft. Aufgrund der Toleranzen befindet sich zwischen der Oberkante der Gegenleiste und dem Messer der ersten Schneideinrichtung immer ein mehr oder weniger großer Spalt, in dem sich Nahrungsmittelreste ansammeln, die nicht nur dazu führen, daß entsprechende Reinigungsarbeiten vorgenommen werden müssen, sondern auch Betriebsstörungen verursachen können.

Aufgabe der Erfindung ist es, eine Vorrichtung und eine Schneideinrichtung nach den Oberbegriffen der Ansprüche 1 bzw. 14 zu schaffen, bei denen die Menge an Nahrungsmittelresten möglichst klein gehalten werden kann.

Diese Aufgabe wird entsprechend den Ansprüchen 1 bzw. 14 gelöst.

Hierdurch läßt sich die Menge an Nahrungsmittelresten, die sich zwischen den beiden Schneideinrichtungen ansammeln, erheblich reduzieren, so daß diese den Betrieb praktisch nicht mehr beeinträchtigen und keine Betriebsstörungen verursachen. Außerdem läßt sich diese Lösung ohne weiteres an bestehenden Kreismesser-Schneideinrichtungen nachrüsten. Eine Umrüstung bei Verwendung anderer Messerstärken bei rotierenden Messern,die bisher notwendig war, ist nicht erforderlich. Schließlich sind hierbei Konstruktionen möglich, die die Zugänglichkeit erhöhen und damit das Reinigen erleichtern.

Weitere Ausgestaltungen der Erfindung sind der nachfolgenden Beschreibung und den Unteransprüchen zu entnehmen.

Die Erfindung wird nachstehend anhand eines in den beigefügten Abbildungen schematisch dargestellten Ausführungsbeispiels näher erläutert.
Fig. 1 zeigt eine Seitenansicht einer Vorrichtung zum Zerkleinern von Nahrungsmitteln.

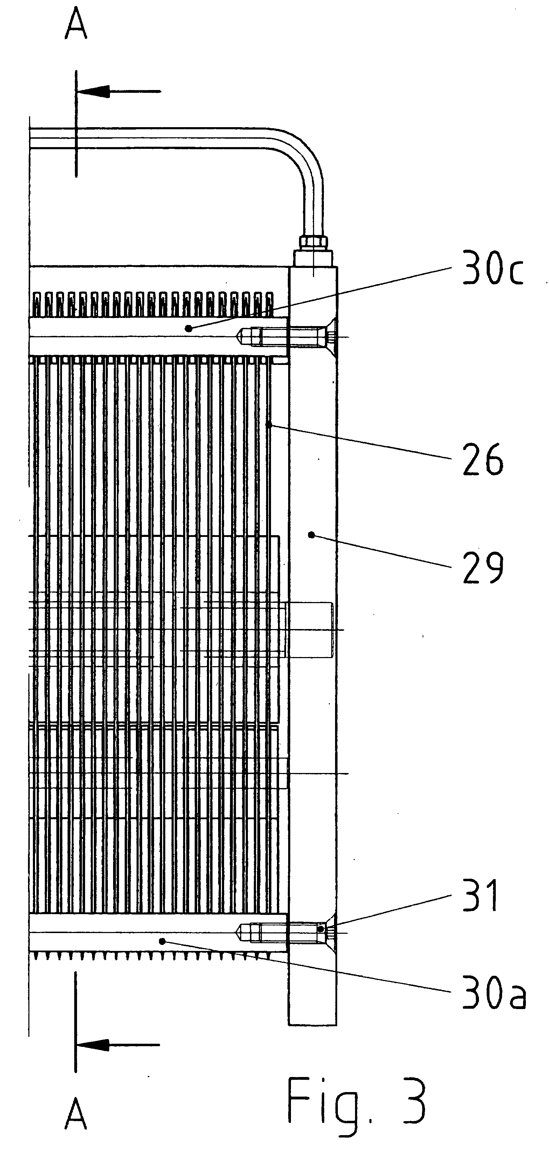

Fig. 2 zeigt einen Ausschnitt aus Fig. 1 im Schnitt längs der Linie A-A von Fig. 3.
Fig. 2a zeigt einen Ausschnitt aus Fig. 2 mit zum Säubern herausgeklappten Teilen.
Fig. 3 zeigt ausschnittweise eine Stirnansicht einer Kreismesser Schneideinrichtung gemäß Fig. 2.

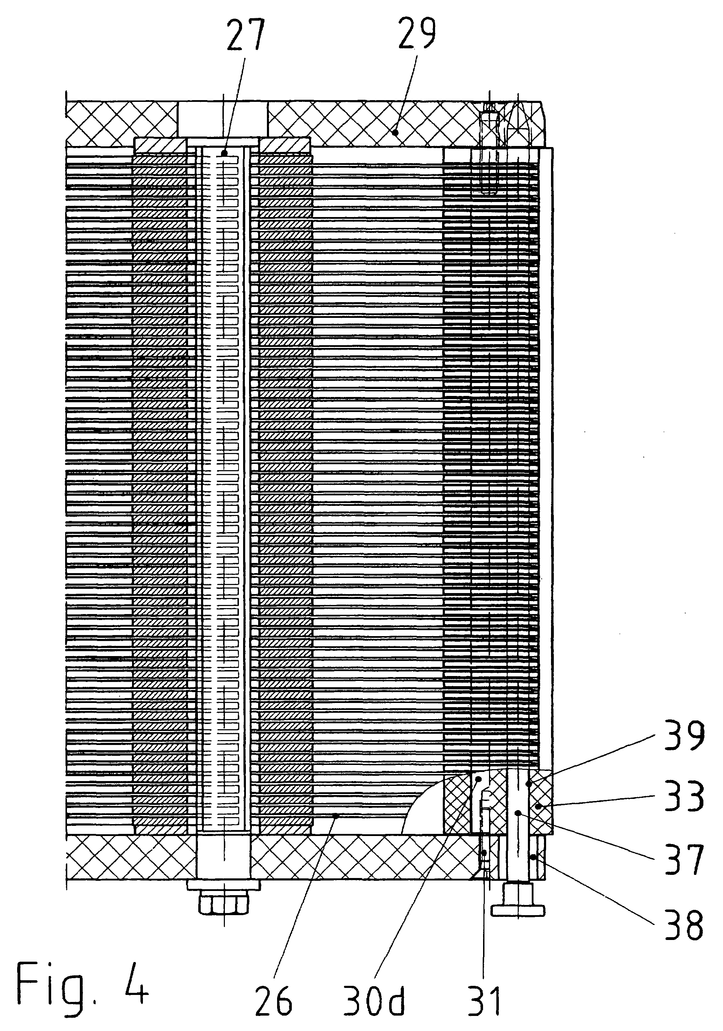

Fig. 4 zeigt ausschnittweise einen Schnitt der Kreismesser-Schneideinrichtung von Fig. 2 längs der Linien B-B von Fig. 2.
Fig. 5 zeigt ausschnittweise eine alternative Ausführungsform einer Gegenleiste einer Kreismesser-Schneideinrichtung der Vorrichtung zum Zerkleinern von Nahrungsmitteln.

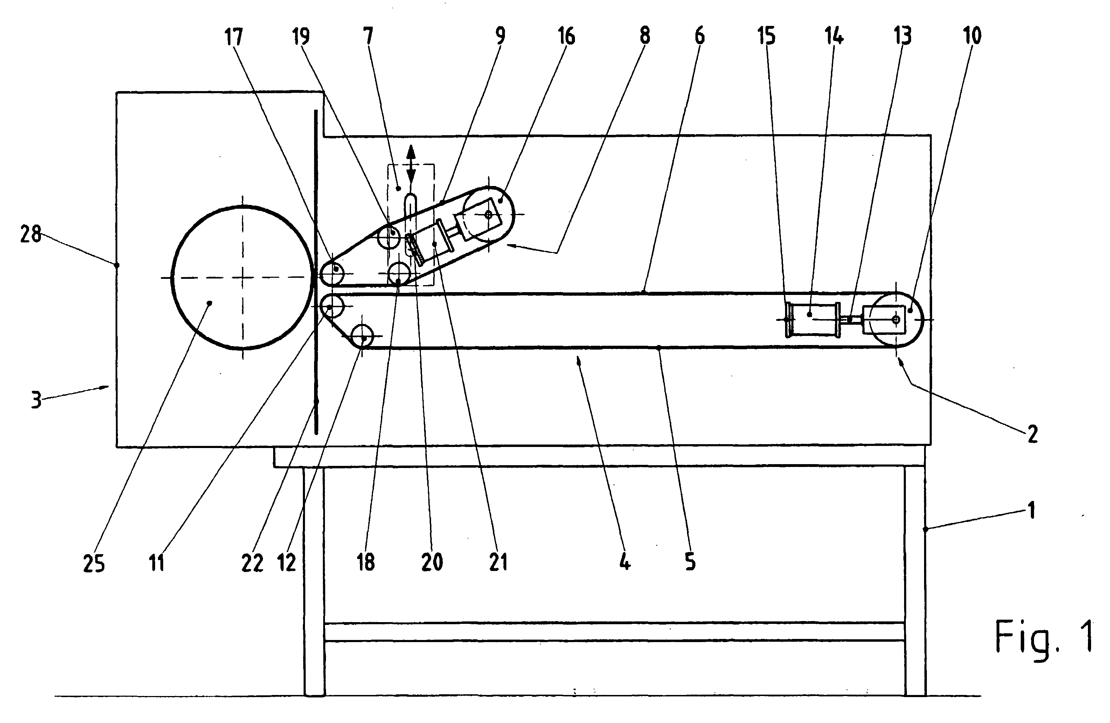

Die dargestellte Vorrichtung umfaßt ein Gestell 1, auf dem eine Fördereinrichtung 2 und eine sich daran anschließende Schneidstation 3 angeordnet sind. Die Fördereinrichtung 2 umfaßt einen Förderer 4 mit einem umlaufenden Förderband 5 gelagert, dessen horizontaler oberer Trum 6 in Fig. 1 von rechts nach links verläuft, um zu zerkleinernde Nahrungsmittel der Schneidstation 3 zuzufördern. Oberhalb des Trums 6 ist auf einem vertikal verstellbaren Schlitten 7 ein Niederhalter-Förderer 8 angeordnet, der ein in der dargestellten Ansicht im Uhrzeigersinn umlaufendes Förderband 9 umfaßt. Beide Förderer 4, 8 werden motorisch angetrieben. Der Schlitten 7 wird auf das zwischen den beiden Förderern 4, 8 durchlaufende Zerkleinerungsgut eine definierte abwärts gerichtete Anpreßkraft, die auf einen konstanten Wert einstellbar ist, ausüben.

Das Förderband 5 ist um eine angetriebene Rolle 10 und eine Umlenkrolle 11 sowie eine weitere leerlaufende Rolle 12 geführt. Die angetriebene Rolle 10 ist zweckmäßigerweise als Läufer eines Trommelmotors ausgebildet, dessen innenliegender Stator mit der Kolbenstange 13 eines Betätigungszylinders 14, etwa eines Pneumatik- oder Hydraulikzylinders, verbunden ist. Der Betätigungszylinder 14 stützt sich mit seinem der angetriebenen Rolle 10 abgekehrten Ende an einer Traverse 15 ab, die einen Teil des Gestells 1 bildet, auf dem das Förderband 5 montiert ist. Der Betätigungszylinder 14 hält das Förderband 5 während des Betriebs gespannt.

Die Schneidstation 3 befindet sich unmittelbar hinter der Umlenkrolle 11. Nahe der Schneidstation 3 und oberhalb des Förderbandes 5 ist das Förderband 9 um eine angetriebene Rolle 16 und Umlenkrollen 17, 18 und 19 geführt. Der Schlitten 7 trägt eine Traverse 20, an der sich ein weiterer Betätigungszylinder 21, etwa ein Pneumatik- oder Hydraulikzylinder, abstützt, dessen Kolbenstange mit dem Stator eines die angetriebene Rolle 16 bildenden Trommelmotors in Wirkverbindung steht. Auch hier kann durch Umschalten des Betätigungszylinders 21 das Förderband 9 gespannt bzw. entspannt werden.

Die Schneidstation 3 umfaßt eine erste Schneideinrichtung 22 beispielsweise mindestens ein von einem Motor 23 zum Umlauf angetriebenes Säbelmesser 24, benachbart zu dem die Förderer 4, 8 enden, um dem Säbelmesser 24 das Schneidgut zuzuführen. Die Schneidstation 3 umfaßt unmittelbar benachbart der ersten Schneideinrichtung 22 eine zweite Schneideinrichtung 25 bestehend aus Kreismessem 26, die parallel zueinander auf einer gemeinsamen, motorgetriebenen Welle 27 angeordnet sind, wobei die Kreismesser 26 senkrecht zu den Säbelmessem 24 zerschneidend angeordnet sind. Die zweite Schneideinrichtung 25 und ihr Motor befinden sich in einem Gehäuse 28, das um eine insbesondere vertikal angeordnete Achse von dem Rest der Vorrichtung wegklappbar ist, so daß das Wegklappen mit geringer Mühe manuell erfolgen kann. Das Gehäuse 28 ist durch eine wasserdichte Trennwand zwischen dem Motor und Schneideinrichtung 25 unterteilt, wodurch die Reinigung der letzteren vereinfacht wird.

Das Gehäuse 28 nimmt die Schneideinrichtung 25 als herausnehmbare Einheit auf, die zu diesem Zweck zwei Seitenwände 29 umfaßt, die durch mehrere Verbindungsstangen 30a bis 30e, die sich zwischen den Seitenwänden 29 erstrecken und an diesen durch Schrauben 31 befestigt sind, miteinander verbunden sind und zwischen sich den Satz von Kreismessern 26 aufnehmen. Einlaufseitig ist hierbei eine Zutrittsöffnung 32 zwischen einer unteren kammartigen Gegenleiste 33 und einem oberen Gegenkamm 34 vorgesehen. Die Gegenleiste 33 dient hierbei zum Abstützen eines von dem wenigstens einen Säbelmesser 24 der ersten Schneideinrichtung 22 abgeschnittenen Nahrungsmittelstücks, das dann zwischen die Kreismesser 26 gedrückt und dort entsprechend zerkleinert wird. Die so zerkleinerten Nahrungsmittelstücke werden durch die Rotation der Kreismesser 26 weiter bis gegen einen kammartigen, zwischen die Kreismesser 26 greifenden Abweiser 35 gefördert, der die ankommenden Nahrungsmittelstücke in einer darunter befindlichen Behälter leitet. Der Abweiser 35 ist nach Herausziehen seiner in Förderrichtung hinteren Befestigungstange 36 in Förderrichtung verschiebbar und um die in Förderrichtung vordere Verbindungsstange 30b hochschwenkbar.

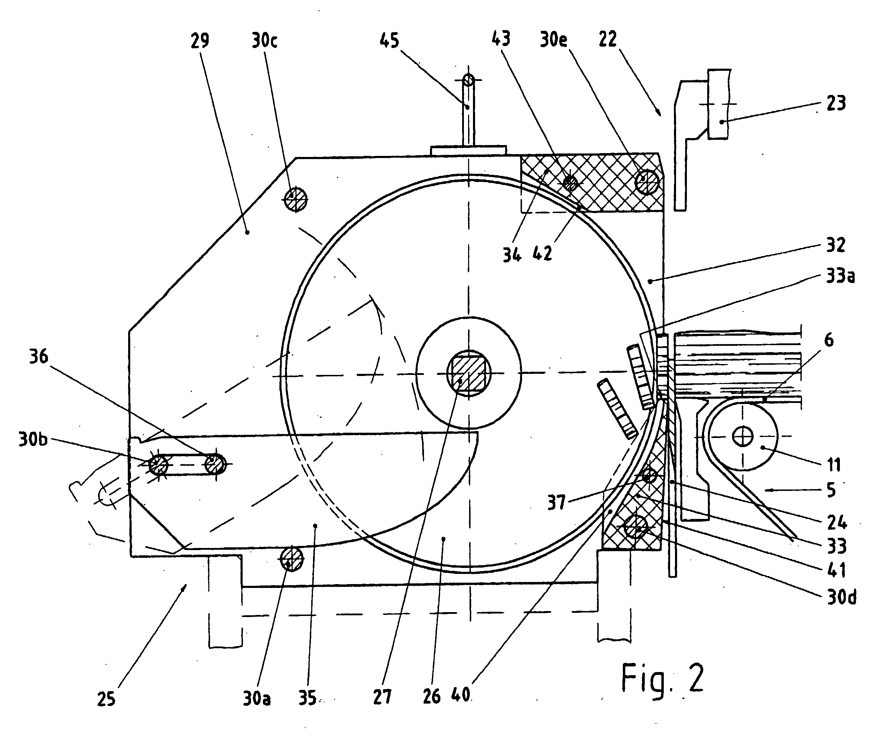

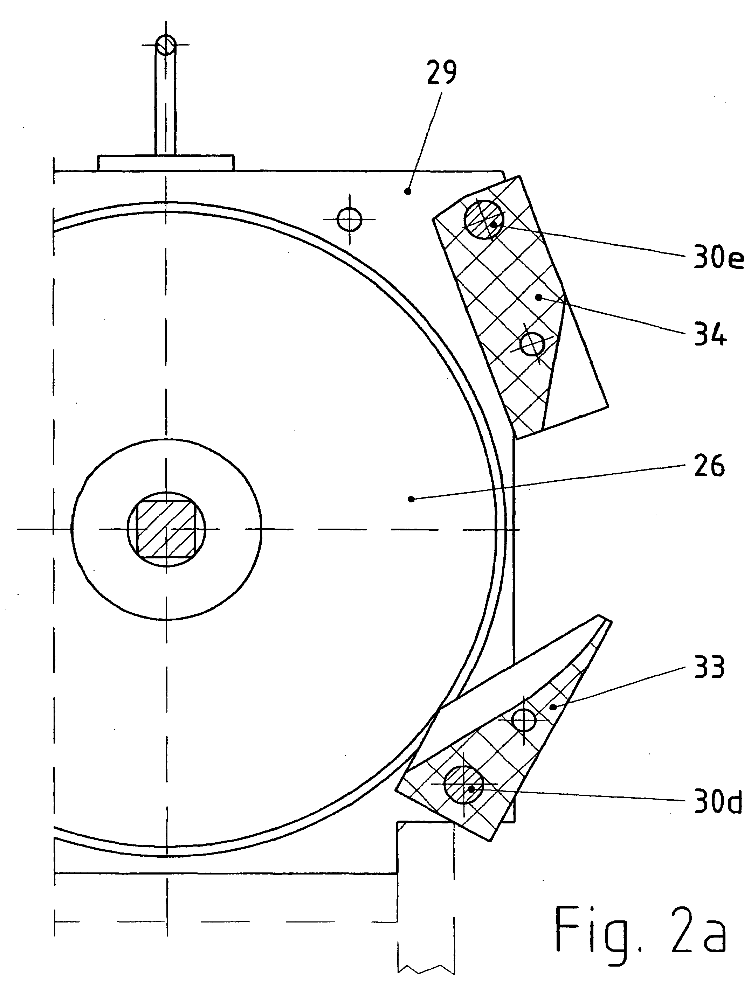

Die Gegenleiste 33 ist, wie aus Fig. 2 ersichtlich, auf der Verbindungsstange 30d schwenkbar zwischen den Seitenwänden 29 angeordnet. Hierbei ist die Bohrung in der Gegenleiste 33, durch die sich die an den Seitenwänden 29 befestigte Verbindungsstange 30d erstreckt, derart angeordnet, daß sich der Schwerpunkt der Gegenleiste 33 auf der ersten Schneideinrichtung 22 zugewandten Seite der Verbindungsstange 30d befindet, so daß die Gegenleiste 33 aufgrund der Schwerkraft die Neigung besitzt, in Richtung zur ersten Schneideinrichtung 22 zu kippen, so daß die Gegenleiste 33 bezüglich des wenigstens einen Säbelmessers 24 selbstanstellend ist und diesbezüglich abstreifend wirkt.

Zusätzlich ist eine Anschlagstange 37 vorgesehen, die in korrespondierenden, sich in Förderrichtung erstreckenden Löchern 38 der Seitenwände 29 mit einem Durchmesser größer als derjenige der Anschlagstange 37 und damit mit entsprechendem Spiel beweglich angeordnet ist. Die Anschlagstange 37 erstreckt sich durch eine Bohrung 39 der Gegenleiste 33, so daß der Schwenkweg der Gegenleiste 33 durch die Löcher 38 in Richtung auf die erste Schneideinrichtung 22 auf ein gewünschtes Maß begrenzt werden kann. Die Anschlagstange 37 ist herausziehbar.

Gegebenenfalls kann eine Verstellung der Anschlagstange 37 auch über Exzenterscheiben (nicht dargestellt) vorgesehen sein, die in den Seitenwänden 29 gelagert sind.

Die Anschlagstange 37 kann einfach herausgezogen werden, so daß dann die Gegenleiste 33 nach außen, d.h. von den Kreismessern 26 weggeschwenkt werden kann, so daß die Gegenleiste 33 mit ihren kammartig angeordneten Nuten 40 zur teilweisen Aufnahme der Kreismesser 26 zum Säubern von Nahrungsmittelresten leicht zugänglich ist.

Die Gegenleiste 33 bildet infolge ihrer Schrägstellung an der der ersten Schneideinrichtung 22 zugewandten Seite benachbart zu ihrer Oberkante 33a beginnend einen keilförmigen, sich nach unten öffnenden Spalt 41, der bewirkt, daß eventuell zwischen Säbelmesser 24 und Gegenleiste 33 gelangende Nahrungsmittelreste leicht nach unten abgeführt werden können. Gegebenenfalls kann dieser durch einen Hinterschnitt noch vergrößert werden.

Der Gegenkamm 34, der ebenfalls kammartige angeordneten Nuten 42 zur teilweisen Aufnahme der Kreismesser 26 aufweist, ist einerseits über die Verbindungsstange 30e sowie über eine weitere, herausziehbare Stange 43 zwischen den Seitenwänden 29 gehalten, so daß der Gegenkamm 34 nach Entfernen der in Förderrichtung vorderen Stange 43 um die Verbindungsstange 30e schwenkbar und damit zum Säubern von Nahrungsmittelresten leicht zugänglich ist.

Anstelle der Anschlagstange 37 können auch in entsprechende Bohrungen der Gegenleiste 33 einsteckbare und herausziehbare Zapfen verwendet werden. Der Gegenkamm 34 kann ebenfalls durch derartige Zapfen anstatt durch die Stange 43 festgelegt werden.

Die Gegenleiste 33 kann gegebenenfalls auch oder zusätzlich mittels Federn, die sich beispielsweise in den Seitenwänden 29 abstützen, in Richtung auf die erste Schneideinrichtung 22 vorgespannt sein.

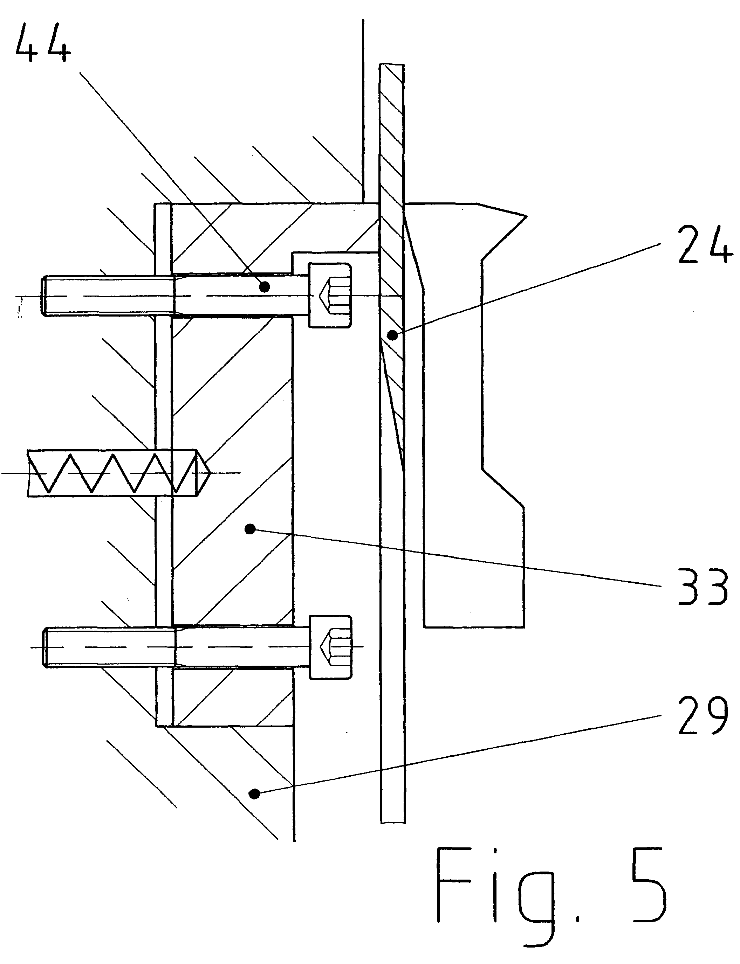

Die Gegenleiste 33 kann auch, wie in Fig. 5 dargestellt, in Richtung auf die erste Schneideinrichtung 22 vorgespannt und mittels Führungselementen 44, hier in Form von in den Seitenwänden 29 verankerten Stellschrauben, deren Köpfe zugleich Anschläge bilden, in Richtung auf die erste Schneideinrichtung 22 verschiebbar angeordnet sein, um so bezüglich des Säbelmessers 24 selbstanstellend zu sein.

Die als Einheit ausgebildete und in das Gehäuse 28 einsetzbare zweite Schneideinrichtung 25 ist zweckmäßigerweise oberseitig mit einem Traggriff 45 versehen, der an den Seitenwänden 29 befestigt ist.

## Patentansprüche

1. Vorrichtung zum Zerkleinern von Nahrungsmitteln mit einer Schneidstation (3) und einer Fördereinrichtung (4, 8) zum im wesentlichen horizontalen Zuführen der Nahrungsmittel zur Schneidstation (3), die eine erste und eine zweite unmittelbar aneinander anschließende Scheideinrichtungen (22, 25) aufweist, von denen die erste sich an die Fördereinrichtung (4, 8) anschließende Schneideinrichtung (22) wenigstens ein um eine sich parallel zur Förderrichtung erstreckende Achse rotierendes Messer (24) und die zweite sich daran in Förderrichtung anschließende Schneideinrichtung (25) einen Satz um eine quer zur Förderrichtung und parallel zur Förderebene sich erstreckende Welle (27) rotierender Kreismesser (26) umfaßt, wobei die zweite Schneideinrichtung (25) benachbart zur ersten Schneideinrichtung (22) eine Gegenleiste (33) zum Abstützen eines von dem wenigstens einen Messer (24) der ersten Schneideinrichtung (22) abgeschnittenen Nahrungsmittelstücks aufweist, **dadurch gekennzeichnet, daß** die Gegenleiste (33) an das wenigstens eine Messer (24) der ersten Schneideinrichtung (22) selbstanstellend angeordnet ist.

2. Vorrichtung nach Anspruch 1, **dadurch gekennzeichnet, daß** die Bewegung der Gegenleiste (33) in Richtung auf die erste Schneideinrichtung (22) durch wenigstens einen Anschlag (37) begrenzt ist.

3. Vorrichtung nach Anspruch 1 oder 2, **dadurch gekennzeichnet, daß** die Gegenleiste (33) um eine parallel zur Welle (27) der rotierenden Kreismesser (26) verlaufende Achse (30d) verschwenkbar angebracht ist.

4. Vorrichtung nach Anspruch 3, **dadurch gekennzeichnet, daß** die Gegenleiste (33) um eine feststehende Verbindungsstange (30d) schwenkbar ist.

5. Vorrichtung nach Anspruch 3 oder 4, **dadurch gekennzeichnet, daß** der Schwerpunkt der Gegenleiste (33) auf der der ersten Schneideinrichtung (22) zugewandten Seite der Achse (30d), um die die Gegenleiste (33) schwenkbar ist, liegt.

6. Vorrichtung nach einem der Ansprüche 1 bis 5, **dadurch gekennzeichnet, daß** die Gegenleiste (33) in Richtung auf die erste Schneideinrichtung (22) federvorgespannt ist.

7. Vorrichtung nach Anspruch 1 oder 2, **dadurch gekennzeichnet, daß** die Gegenleiste (33) in Richtung auf die erste Schneideinrichtung (22) verschiebbar und federvorgespannt ist.

8. Vorrichtung nach einem der Ansprüche 2 bis 7, **dadurch gekennzeichnet, daß** der Anschlag eine sich durch eine Bohrung der Gegenleiste (33) erstreckende Anschlagstange (37) ist, die von Bohrungen (38) mit Übermaß in Seitenwänden (29) der zweiten Schneideinrichtung (25) aufgenommen ist.

9. Vorrichtung nach Anspruch 8, **dadurch gekennzeichnet, daß** die Anschlagstange (37) herausziehbar ist.

10. Vorrichtung nach einem der Ansprüche 2 bis 7, **dadurch gekennzeichnet, daß** der Anschlag eine Stellschraube (44) ist.

11. Vorrichtung nach einem der Ansprüche 1 bis 10, **dadurch gekennzeichnet, daß** die Gegenleiste (33) an der der ersten Schneideinrichtung (22) zugewandten Seite unterhalb ihrer Oberkante (33a) einen sich nach unten erweiternden Spalt (41) mit der ersten Schneideinrichtung (22) bildet.

12. Vorrichtung nach einem der Ansprüche 1 bis 11, **dadurch gekennzeichnet, daß** die zweite Schneideinrichtung (25) mit Abstand über der Gegenleiste (33) einen Gegenkamm (34) aufweist, der über zwei sich durch den Gegenkamm (34) erstreckende Stangen (30e, 43) zwischen Seitenwänden (29) der zweiten Schneideinrichtung (25) gehalten und um eine der beiden Stangen (30e) schwenkbar angeordnet ist.

13. Vorrichtung nach einem der Ansprüche 1 bis 12, **dadurch gekennzeichnet, daß** die zweite Schneideinrichtung (25) als Einheit in ein Gehäuse (28) einsetzbar ist, das um eine vertikale Achse von der ersten Schneideinrichtung (22) wegschwenkbar ist.

14. Schneideinrichtung zum Zerkleinern von Nahrungsmitteln mit zwei beabstandeten Seitenwänden (29), zwischen denen einen Satz von um eine Achse drehend antreibbaren Kreismessern (26) angeordnet ist, wobei eintrittsseitig eine zwischen den Seitenwänden (29) angeordnete Gegenleiste (33) zum Abstützen eines einlaufenden Nahrungsmittelstücks vorgesehen ist, **dadurch gekennzeichnet, daß** die Gegenleiste (33) mit ihrer Oberkante (33a) nach außen verstellbar ist.

15. Schneideinrichtung nach Anspruch 14, **dadurch gekennzeichnet, daß** die Bewegung der Gegenleiste (33) in Richtung auf die erste Schneideinrichtung (22) durch wenigstens einen Anschlag (37) begrenzt ist.

16. Schneideinrichtung nach Anspruch 14 oder 15, **dadurch gekennzeichnet, daß** die Gegenleiste (33) um eine parallel zur Welle (27) der rotierenden Kreismesser (26) verlaufende Achse (30d) verschwenkbar angebracht ist.

17. Schneideinrichtung nach Anspruch 16, **dadurch gekennzeichnet, daß** die Gegenleiste (33) um eine feststehende Verbindungsstange (30d) schwenkbar ist.

18. Schneideinrichtung nach Anspruch 16 oder 17, **dadurch gekennzeichnet, daß** der Schwerpunkt der Gegenleiste (33) auf der der ersten Schneideinrichtung (22) zugewandten Seite der Achse (30d), um die die Gegenleiste (33) schwenkbar ist, liegt.

19. Schneideinrichtung nach einem der Ansprüche 14 bis 18, **dadurch gekennzeichnet, daß** die Gegenleiste (33) in Richtung auf die erste Schneideinrichtung (22) federvorgespannt ist.

20. Schneideinrichtung nach Anspruch 14 oder 15, **dadurch gekennzeichnet, daß** die Gegenleiste (33) in Richtung auf die erste Schneideinrichtung (22) verschiebbar und federvorgespannt ist.

21. Schneideinrichtung nach einem der Ansprüche 15 bis 20, **dadurch gekennzeichnet, daß** der Anschlag eine sich durch eine Bohrung der Gegenleiste (33) erstreckende Anschlagstange (37) ist, die von Bohrungen (38) mit Übermaß in Seitenwänden (29) der zweiten Schneideinrichtung (25) aufgenommen ist.

22. Schneideinrichtung nach Anspruch 21, **dadurch gekennzeichnet, daß** die Anschlagstange (37) herausziehbar ist.

23. Schneideinrichtung nach einem der Ansprüche 15 bis 22, **dadurch gekennzeichnet, daß** der Anschlag eine Stellschraube (44) ist.

24. Schneideinrichtung nach einem der Ansprüche 14 bis 24, **dadurch gekennzeichnet, daß** die zweite Schneideinrichtung (25) mit Abstand über der Gegenleiste (33) einen Gegenkamm (34) aufweist, der über zwei sich durch den Gegenkamm (34) erstreckende Stangen (30e, 43) zwischen Seitenwänden (29) der zweiten Schneideinrichtung (25) gehalten und um eine der beiden Stangen (30e) schwenkbar angeordnet ist.

## Claims

1. Apparatus for cutting up foodstuffs, having a cutting station (3) and a conveying device (4, 8) for essentially horizontally feeding the foodstuffs to the cutting station (3), which has a first cutting device (22) and a second cutting device (25) which directly adjoin one another and of which the first cutting device (22) adjoining the conveying device (4, 8) comprises at least one knife (24) rotating about an axis extending parallel to the conveying direction and the second cutting device (25) adjoining said cutting device (22) in the conveying direction comprises a set of circular knives (26) rotating about a shaft (27) extending transversely to the conveying direction and parallel to the conveying plane, the second cutting device (25) having adjacent to the first cutting device (22) an opposing strip (33) for supporting a foodstuff piece cut off by the at least one knife (24) of the first cutting device (22), **characterized in that** the opposing strip (33) is arranged so as to be self-adjusting with respect to the at least one knife (24) of the first cutting device (22).

2. Apparatus according to Claim 1, **characterized in that** the movement of the opposing strip (33) in the direction of the first cutting device (22) is limited by at least one stop (37).

3. Apparatus according to Claim 1 or 2, **characterized in that** the opposing strip (33) is attached in a pivotable manner about an axis (30d) running parallel to the shaft (27) of the rotating circular knives (26).

4. Apparatus according to Claim 3, **characterized in that** the opposing strip (33) is pivotable about a fixed connecting rod (30d).

5. Apparatus according to Claim 3 or 4, **characterized in that** the centre of gravity of the opposing strip (33) lies on that side of the axis (30d), about which the opposing strip (33) can be pivoted, which faces the first cutting device (22).

6. Apparatus according to one of Claims 1 to 5, **characterized in that** the opposing strip (33) is spring-preloaded in the direction of the first cutting device (22).

7. Apparatus according to Claim 1 or 2, **characterized in that** the opposing strip (33) is displaceable and spring-preloaded in the direction of the first cutting device (22).

8. Apparatus according to one of Claims 2 to 7, **characterized in that** the stop is a stop rod (37) which extends through a hole of the opposing strip (33) and is accommodated with holes (38) having an oversize in side walls (29) of the second cutting device (25).

9. Apparatus according to Claim 8, **characterized in that** the stop rod (37) can be pulled out.

10. Apparatus according to one of Claims 2 to 7, **characterized in that** the stop is an adjusting screw (44).

11. Apparatus according to one of Claims 1 to 10, **characterized in that** the opposing strip (33), on that side below its top edge (33a) which faces the first cutting device (22), forms a downwardly extending gap (41) with the first cutting device (22).

12. Apparatus according to one of Claims 1 to 11, **characterized in that** the second cutting device (25) has an opposing comb (34) at a distance above the opposing strip (33), which opposing comb (34) is held between side walls (29) of the second cutting device (25) via two rods (30e, 43) extending through the opposing comb (34) and is pivotably arranged about one of the two rods (30e).

13. Apparatus according to one of Claims 1 to 12, **characterized in that** the second cutting device (25) can be inserted as a unit into a housing (28) which can be pivoted away from the first cutting device (22) about a vertical axis.

14. Cutting device for cutting up foodstuffs, having two spaced-apart side walls (29), between which a set of circular knives (26) which can be rotationally driven about an axis is arranged, an opposing strip (33) arranged between the side walls (29) and intended for supporting an incoming foodstuff piece is provided on the inlet side, **characterized in that** the opposing strip (33) can be adjusted outwards with its top edge (33a).

15. Cutting device according to Claim 14, **characterized in that** the movement of the opposing strip (33) in the direction of the first cutting device (22) is limited by at least one stop (37).

16. Cutting device according to Claim 14 or 15, **characterized in that** the opposing strip (33) is attached in a pivotable manner about an axis (30d) running parallel to the shaft (27) of the rotating circular knives (26).

17. Cutting device according to Claim 16, **characterized in that** the opposing strip (33) is pivotable about a fixed connecting rod (30d).

18. Cutting device according to Claim 16 or 17, **characterized in that** the centre of gravity of the opposing strip (33) lies on that side of the axis (30d), about which the opposing strip (33) can be pivoted, which faces the first cutting device (22).

19. Cutting device according to one of Claims 14 to 18, **characterized in that** the opposing strip (33) is spring-preloaded in the direction of the first cutting device (22).

20. Cutting device according to Claim 14 or 15, **characterized in that** the opposing strip (33) is displaceable and spring-preloaed in the direction of the first cutting device (22).

21. Cutting device according to one of Claims 15 to 20, **characterized in that** the stop is a stop rod (37) which extends through a hole of the opposing strip (33) and is accommodated with holes (38) having an oversize in side walls (29) of the second cutting device (25).

22. Cutting device according to Claim 21, **characterized in that** the stop rod (37) can be pulled out.

23. Cutting device according to one of Claims 15 to 22, **characterized in that** the stop is an adjusting screw (44).

24. Cutting device according to one of Claims 14 to 24, **characterized in that** the second cutting device (25) has an opposing comb (34) at a distance above the opposing strip (33), which opposing comb (34) is held between side walls (29) of the second cutting device (25) via two rods (30e, 43) extending through the opposing comb (34) and is pivotably arranged about one of the two rods (30e).

## Revendications

1. Dispositif permettant de fractionner des aliments, avec un poste de découpe (3) et un dispositif de transport (4, 8) acheminant sensiblement horizontalement les aliments vers le poste de découpe (3), qui comprend des premier et deuxième dispositifs de découpe (22, 25) directement adjacents l'un à l'autre, dont le premier dispositif de découpe (22) adjacent au dispositif de transport (4, 8) contient au moins un couteau rotatif (24) tournant autour d'un axe s'étendant parallèlement à la direction de transport, et le deuxième dispositif de découpe (25) adjacent à celui-ci dans la direction de transport contient un jeu de couteaux circulaires rotatifs (26) tournant autour d'un arbre (27) s'étendant transversalement par rapport à la direction de transport et parallèlement au plan de transport, moyennant quoi le deuxième dispositif de découpe (25), voisin du premier dispositif de découpe (22), présente un contre-rebord (33) permettant de supporter un aliment découpé par au moins un couteau (24) du premier dispositif de découpe (22), **caractérisé en ce que** le contre-rebord (33) est disposé de manière à pouvoir se positionner automatiquement sur au moins un couteau (24) du premier dispositif de découpe (22).

2. Dispositif selon la revendication 1, **caractérisé en ce que** le déplacement du contre-rebord (33) est limité en direction du premier dispositif de découpe (22) par au moins une butée (37).

3. Dispositif selon la revendication 1 ou 2, **caractérisé en ce que** le contre-rebord (33) est appliqué de manière à pouvoir pivoter autour d'un axe (30d) parallèle à l'arbre (27) du couteau circulaire rotatif (26).

4. Dispositif selon la revendication 3, **caractérisé en ce que** le contre-rebord (33) peut pivoter autour d'une tige de raccordement (30d) fixe.

5. Dispositif selon la revendication 3 ou 4, **caractérisé en ce que** le centre de gravité du contre-rebord (33) se trouve sur le côté orienté vers le premier dispositif de découpe (22) de l'axe (30d), autour duquel peut pivoter le contre-rebord (33).

6. Dispositif selon l'une quelconque des revendications 1 à 5, **caractérisé en ce que** le contre-rebord (33) est précontraint par un ressort en direction du premier dispositif de découpe (22).

7. Dispositif selon la revendication 1 ou 2, **caractérisé en ce que** le contre-rebord (33) peut se déplacer en direction du premier dispositif de découpe (22), et est précontraint par un ressort.

8. Dispositif selon l'une quelconque des revendications 2 à 7, **caractérisé en ce que** la butée est une tige d'arrêt (37) s'étendant au travers d'un alésage du contre-rebord (33), laquelle est reçue par les alésages (38) avec une dimension excessive dans les parois latérales (29) du deuxième dispositif de découpe (25).

9. Dispositif selon la revendication 8, **caractérisé en ce que** la tige d'arrêt (37) peut être enlevée.

10. Dispositif selon l'une quelconque des revendications 2 à 7, **caractérisé en ce que** la butée est une vis de réglage (44).

11. Dispositif selon l'une quelconque des revendications 1 à 10, **caractérisé en ce que** le contre-rebord (33) forme, sur le côté orienté vers le premier dispositif de découpe (22), en dessous de son bord supérieur (33a), une fente (41) s'élargissant vers le bas avec le premier dispositif de découpe (22).

12. Dispositif selon l'une quelconque des revendications 1 à 11, **caractérisé en ce que** le deuxième dispositif de découpe (25) présente, à une certaine distance au-dessus du contre-rebord (33), un contre-peigne (34) qui est maintenu entre les parois latérales (29) du deuxième dispositif de découpe (25) par l'intermédiaire de deux tiges (30e, 43) s'étendant au travers du contre-peigne (34), et est disposé de manière à pouvoir pivoter autour de l'une des deux tiges (30e).

13. Dispositif selon l'une quelconque des revendications 1 à 12, **caractérisé en ce que** le deuxième dispositif de découpe (25) peut être utilisé sous la forme d'unité dans un boîtier (28), qui peut pivoter autour d'un axe vertical en s'éloignant du premier dispositif de découpe (22).

14. Dispositif de découpe permettant de fractionner des aliments avec deux parois latérales (29) espacées, entre lesquelles est disposé un jeu de couteaux circulaires (26) pouvant être actionnés en tournant autour d'un axe, moyennant quoi, du côté admission, il est prévu un contre-rebord (33) disposé entre les parois latérales (29), permettant de supporter un aliment admis, **caractérisé en ce que** le contre-rebord (33) peut être déplacé vers l'extérieur avec son bord supérieur (33a).

15. Dispositif de découpe selon la revendication 14, **caractérisé en ce que** le déplacement du contre-rebord (33) en direction du premier dispositif de découpe (22) est limité par au moins une butée (37).

16. Dispositif de découpe selon la revendication 14 ou 15, **caractérisé en ce que** le contre-rebord (33) est appliqué en pouvant pivoter autour d'un axe (30d) parallèle à l'arbre (27) du couteau circulaire rotatif (26).

17. Dispositif de découpe selon la revendication 16, **caractérisé en ce que** le contre-rebord (33) peut pivoter autour d'une tige de raccordement (30d) fixe.

18. Dispositif de découpe selon la revendication 16 ou 17, **caractérisé en ce que** le centre de gravité du contre-rebord (33) se trouve sur le côté orienté vers le premier dispositif de découpe (22) de l'axe (30d) autour duquel peut pivoter le contre-rebord (33).

19. Dispositif de découpe selon l'une quelconque des revendications 14 à 18, **caractérisé en ce que** le contre-rebord (33) est précontraint par un ressort en direction du premier dispositif de découpe (22).

20. Dispositif de découpe selon la revendication 14 ou 15, **caractérisé en ce que** le contre-rebord (33) peut se déplacer en direction du premier dispositif de découpe (22) et est précontraint par un ressort.

21. Dispositif de découpe selon l'une quelconque des revendications 15 à 20, **caractérisé en ce que** la butée est une tige d'arrêt (37) s'étendant au travers d'un alésage du contre-rebord (33), qui est reçue par les alésages (38) avec une dimension excessive dans les parois latérales (29) du deuxième dispositif de découpe (25).

22. Dispositif de découpe selon la revendication 21, **caractérisé en ce que** la tige d'arrêt (37) peut être enlevée.

23. Dispositif selon l'une quelconque des revendications 15 à 22, **caractérisé en ce que** la butée est une vis réglable (44).

24. Dispositif de découpe selon l'une quelconque des revendications 14 à 24, **caractérisé en ce que** le deuxième dispositif de découpe (25) présente, à une certaine distance au-dessus du contre-rebord (33), un contre-peigne (34) qui est maintenu au-dessus de deux tiges (30e, 43) s'étendant au travers du contre-peigne (34), entre les parois latérales (29) du deuxième dispositif de découpe (25), et est disposé en pouvant pivoter autour de l'une des deux tiges (30e).
